(19) **Europäisches Patentamt**
**European Patent Office**
**Office européen des brevets**

(11) Publication number: **0 355 553**
**A1**

## (12) EUROPEAN PATENT APPLICATION

(21) Application number: **89114565.8**

(22) Date of filing: **07.08.89**

(51) Int. Cl.4: **C08K 3/34 , C08L 23/04**

(30) Priority: **08.08.88 IT 2168388**

(43) Date of publication of application:
**28.02.90 Bulletin 90/09**

(84) Designated Contracting States:
**BE DE FR GB NL**

(71) Applicant: **AUSIDET S.p.A.**
**31, Foro Buonaparte**
**Milano(IT)**

(72) Inventor: **Gimpel, Franco**
**18, Via F. Nullo**
**I-20129 (Milano)(IT)**
Inventor: **Bressan, Giancarlo**
**37, Via Compagnoni**
**I-20129 Milano(IT)**
Inventor: **Gafá, Salvatore**
**45, Via Messina**
**I-20154 Milano(IT)**
Inventor: **Brichta, Corrado**
**36, Via Losanna**
**I-20154 Milano(IT)**
Inventor: **Troglia, Claudio**
**27, Via R. Sanzio**
**I-20149 Milano(IT)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

(54) **Process for producing crosslinked articles of silanized olefinic polymers.**

(57) A process for producing, by extrusion, injection-moulding or any other conventional shaping method, crosslinked articles (of any desired thickness) of silanized olefinic polymers, which articles show a degree of silane crosslinking of at least 45%, is disclosed. Said process is characterized in that a molecular sieve (having a zeolite structure and preferably having a water content of from about 3% to about 18% by weight), is added to the polymer before or during said shaping process, the amount of said molecular sieve being such that the water contained therein is equal to, or higher than, 0.5 mol per mol of reactive silane groups present in the polymer.

## PROCESS FOR PRODUCING CROSSLINKED ARTICLES OF SILANIZED OLEFINIC POLYMERS

The present invention relates to a process for producing crosslinked articles of any desired thickness on the basis of silanized olefinic polymers, in particular polyethylene or ethylene copolymers. The crosslinking of the polyolefins is made possible by linking to the polyolefinic chain alkoxy-silane groups liable to be hydrolysed and successively condensed, whereby

-Si-O-Si-

linkages are formed between silane groups belonging to different polyolefinic chains.

Silanized olefinic polymers containing hydrolyzable alkoxy-silane groups generally are transformed into shaped articles by means of injection moulding, extrusion or other conventional shaping processes. Said articles are then subjected to crosslinking by means of water. This method is not suitable, however, for manufacturing crosslinked articles of considerable thickness, owing to the slow diffusion of water to the interior of the article.

According to US-A-4,529,750 and 4,680,319 and EP-A-149,782, a substantial improvement of said process can be achieved by adding a particular kind of zeolite to the silanized polymer.

According to said prior art, the article is first shaped by injection moulding or extrusion, and said shaped article subsequently is subjected to a treatment with water at elevated temperature, or to a treatment with microwaves.

GB-A-1,581,041 describes a process for the extrusion of silanized polymers which contain substances capable of releasing $H_2O$ at high temperatures; thereby a crosslinked article is directly obtained. However, according to said process the article has to pass through a pressurized cooling chamber in order to prevent the formation of voids inside the article. The system is quite complex, above all when pipes have to be manufactured, because in this case a pressure has to be applied to the inner walls of the pipes, in order to balance the pressure inside the pressurizing chamber. Said GB-A does not teach practical systems for solving this problem nor systems for preventing an excessive premature crosslinking (by the release of water during the manufacture of the article).

It has now surprisingly been found that the transformation of silanized olefinic polymers, containing a zeolite, into formed articles can be carried out by means of e.g. extrusion or injection moulding, the crosslinking of the finished article being achieved already at the outlet of the extruder or of the mould, without any need for a subsequent crosslinking step, by means of water or heating (in particular, by microwaves). The degree of crosslinking of the article thus obtained is at least 45%, said degree corresponding to the percentage (by weight) of polymer rendered insoluble due to crosslinking, based on the total weight of the polymer.

In its broadest aspect, the present invention relates to a process of producing, by extrusion, injection-moulding or any other conventional shaping method, articles (of any desired thickness) based on silanized olefinic polymers, said articles having a degree of silane crosslinking of at least 45%, said process being characterized in that said polymers are mixed, before or during said extrusion or other shaping process is carried out, with a molecular sieve having a zeolite structure (and preferably having a water content from about 3% to about 18% by weight), the amount of said molecular sieve being such that the amount of water contained in it is equal to or higher than about 0.5 mol per each mol of silane groups reacting in the polymer.

The hydrolytic reactions which take place during the shaping, e.g. the extrusion or the injection moulding, are due to interactions, in the heterogeneous phase, between the alkoxy-silane groups of the polymer and the surfaces of the zeolite particles which are finely dispersed in the mixture.

Both the water molecules (contained in the crystal lattice of the zeolites) and the terminal silanol groups (present on the active surfaces of the crystalline zeolite agglomerates) participate in the hydrolytic reactions. The presence of said silanol groups in (partially dehydrated A, X and Y) zeolites is evidenced by the I.R. spectra (see: "Zeolites: Science and Technology" by F. Ramoa Ribeiro et al.; 1984; Martinus Nijhoff Publisher; page 167). This reaction mechanism (of the interface type) leads to a good control of the hydrolysis, resulting in a gradual development of the crosslinking process. The limiting factor of the overall process, in fact, is the rate of hydrolysis of the alkoxysilane groups of the polymer (see the Technical Bulletin issued by BP Chemicals Wire and Cable on March 2nd, 1984).

Said control is not possible when the commonly employed hydrated salts are used as water source. In fact, the latter release their crystallization water at once at a given temperature, making the control of the reaction, which is necessary for a one-step crosslinking and extrusion process, impossible.

Said hydrolytic reactions and the subsequent crosslinking can also continue after the end of the shaping process and thus reach completion, throughout the entire shaped article, even when said article has a considerable thickness.

The zeolites to be used according to the present invention (optionally after a partial dehydration) preferably belong to the following classes:

- 4A zeolite, corresponding, in its hydrated state, to the formula:

$Na_2O . Al_2O_3 . 2 SiO_2 . 4.5 H_2O$

(containing 22.1% by weight of water), wherein the $Na^+$ ion in the tridimensional crystal lattice can also be (partially) replaced by other cations, such as $K^+$ cations (3A zeolite) or $Ca^{++}$ cations (5A zeolite);

- zeolites of the X type, particularly 13X zeolites; the X zeolites, in their hydrated state, correspond to the formula:

$Na_2O . Al_2O_3 . 2.4 SiO_2 . 6 H_2O$

(containing 25.6% by weight of water);

- zeolites of the Y type, which, in their hydrated form, typically correspond to the formula:

$Na_2O . Al_2O_3 4.8 SiO_2 . 8.9 H_2O$

(containing 26.16% by weight of water); the acid form, $H^+Y$, can also be used;

- P zeolites having the structure of the synthetic Phillipsite: they can be synthetized according to FR-A-1,213,628;

- Hydroxysodalite, represented by the formula:

$Na_2O . Al_2O_3 . 2 SiO_2 . 2.5 H_2O$

(containing 13.3% by weight of water).

Mixtures of the above zeolites may also be used.

One can also employ other molecular sieves having a zeolite structure such as, for instance, aluminophosphates or boroaluminosilicates. They can be obtained, for example, according to EP-A-184,307 and US-A-4,385,994.

The zeolite should have a suitable granulometry, in order to allow a perfect dispersion thereof in the polymeric mass. Preferably, at least 80% by weight of the zeolite are constituted by particles having a size lower than about 15 (and most preferred lower than about 10) $\mu$m, as determined by means of the "Coulter Counter" method.

The amount of zeolite to be employed is such that the amount of water contained therein is at least equal to the amount necessary for the silane crosslinking, i.e. 0.5 mols per each mol of reactive silane group present in the olefinic polymer.

Taking into consideration the working conditions of the present process, the amount of zeolite, determined as above, in general will be from about 1% to about 20% by weight, with respect to the weight of the silanized polymer.

The degree of hydration which the zeolite should have in order to meet the above conditions generally is from about 3% to about 18%, and preferably from about 5% to about 15% by weight.

If the starting polymer contains fillers with a certain water content and if the water is released at a temperature equal to or lower than the shaping temperature, the water content of the zeolite is to be reduced correspondingly. This is also true for any humidity possibly contained in the pristine polymer used as starting material.

The preferred silanized olefinic polymers employed according to the present invention are the various polymers and copolymers of ethylene and propylene such as, e.g.:

- high-density, medium-density and low-density polyethylene; - polypropylene;

- copolymers of ethylene and propylene and/or other (preferably $C_{4-8}$) monoolefins (butene-1 etc.);

- ethylene/vinyl acetate or ethylene/(meth)acrylate copolymers;

- ethylene/propylene/diene (e.g. 1,3-butadiene) terpolymers.

The silanized polymers to be used in the process according to the present invention generally have a content of hydro lyzable silane groups of from about 1% to about 10% by weight, preferably from about 1.5% to about 3% by.weight.

The silanized polymers can be obtained according to well known techniques, e.g. by grafting of an alkoxyvinyl-silane onto the polyolefinic chain in the presence of peroxides. According to an alternative route, the silane may be introduced by means of a chemical reaction (esterification or transesterification) with carboxy (or ester) groups which have been linked to the polyolefinic chain by copolymerizing the olefin with acrylic or methacrylic acid or esters thereof.

Said silanized polymers can be also obtained, e.g., according to EP-A-193,317, by copolymerizing vinyl-silane with the starting olefin.

The unsaturated, hydrolyzable alkoxy-silanes, such as, e.g. the alkoxyvinyl-silanes (or acyloxyvinyl-silanes), which can be used are those which are normally used in the silane crosslinking of polyolefins, e.g. those disclosed in US-A-3,646,155. Examples thereof include vinyl-trimethoxy-silane, vinyl-triethoxy-silane, vinyl-methyl-dimethoxy-silane, vinyl-triacetoxy-silane, gamma-methacryloxypropyl-trimethoxy-silane etc.

The composition based on olefinic polymers to be used according to the invention may additionally contain a catalyst for the silanol condensation, in particular an organic tin or titanium compound, such as dibutyltin-dilaurate, tetra-n-butyl-titanate, or polymeric butyl titanate. The amount of catalyst preferably is from about 0.05% to about 0.10% by weight, with respect to the weight of the polymer. This catalyst may also have previously been supported on a zeolite of a type equal to or different from the zeolites used for the crosslinking.

In the process according to the present invention a crosslinking co-agent can advantageously be used. Said co-agent preferably is selected from arylcarboxylic acids (such as, e.g., tert.-butyl-benzoic acid), or arylsulfonic acids, said acids having a melting point higher than the one of the olefinic polymer. The preferred amount of this co-agent, which also can be supported on a zeolite, is from 1 to 25 parts by weight per 100 parts of zeolite. Suitable arylcarboxylic acids are those disclosed in US-A-4,518,731, according to which said acids, in their salt form, exert a nucleating effect on the crystalline polymers.

Both the zeolite and the crosslinking co-agent (as well as the silanol condensation catalyst) can be introduced into the polymeric composition as a masterbatch (a concentrated blend), constituted by the base polymer containing a high concentration of these additives.

The following examples are given in order to illustrate the present invention, without limiting in any way the scope thereof.

EXAMPLE 1 (Comparative)

On a drum tumbler, the following components, in granular form, were blended:

a) 95 parts by weight of an ethylene-vinyltrimethoxy-silane copolymer having the following properties:
- density = 0.925 g/cm$^3$,
- melt flow index = 0.5 dg/1 minute (ISO 1133 Standard)
- silane content = 1.5% by weight (manufactured by BP; trade name: SLPE Type MCA 427);

b) 5 parts by weight of a masterbatch containing 1% by weight of crosslinking catalyst (dibutyltin-dilaurate) in Riblene® CF.2 polyethylene (sold by ENI), having the following properties:
- density = 0.922 g/cm$^3$,
- melt flow index = 2 (190° C/2.16 kg; according to ASTM D 1238).
This masterbatch had been prepared in a laboratory roll mill heated at 110° C; the product, in sheet form, was then broken into small pieces in a blade-mill.

The blend of (a) and (b), in the form of granules, was fed to a single-screw extruder (for polyethylene), having an L/D ratio of 22 (diameter = 45 mm; revolution speed = 30 rpm) and being equipped with a screw for polyethylene processing (compression ratio = 3:1). Said blend then was extruded at 190° C, in order to shape a pipe having an inner diameter of 14 mm and an outer diameter of 16 mm.

On a sample of this pipe the content of insoluble gel was determined by extraction with boiling xylene for 12 hours (in a Soxhlet extractor; ASTM D 2765-68). The content of insoluble gel was much lower than 5% by weight.

EXAMPLE 2

On the same roll mill as employed in example 1, 49.5 parts by weight of Riblene® CF.2 polyethylene, 0.5 parts of dibutyltin-dilaurate and 50 parts of 4A zeolite were blended. The 4A zeolite had previously been dehydrated to a water content of 10% by weight, starting from a zeolite traded as "Merilit®B" (Ausidet). The sheet obtained from the roll mill was then broken into small pieces on a blade mill.

10 parts by weight of the above masterbatch and 90 parts of the ethylene/vinyl-trimethoxy-silane copolymer of example 1 were blended.

By operating in exactly the same way as in example 1, the same shaped article was manufactured; on a sample of the latter, an insoluble gel content of 70% by weight was determined.

EXAMPLE 3

The process was carried out in the same way as in example 2, but only 5 parts by weight of the masterbatch of Riblene®/catalyst/4A zeolite (10% of water) were blended with 95 parts of ethylene/vinyltrimethoxy-silane copolymer.

The shaped article, manufactured by extruding said blend at 190° C, showed a content of 57% by weight of insoluble gel.

EXAMPLE 4

The process was carried out in the same way as in example 3, the only difference being that the masterbatch contained 4A zeolite dehydrated down to 8% of water.

The shaped article, obtained by extrusion at 190° C, showed a content of 55% by weight of insoluble gel.

EXAMPLE 5

The process was carried out in exactly the same way as in example 2, using a zeolite of the same type, but dehydrated down to 5% of water. The extruded finished article showed a 45% content of insoluble gel, and a swelling of 13%. The insoluble gel content spontaneously increased in the finished article, reaching 60% after 24 hours.

EXAMPLE 6 (Comparative)

On a drum tumbler, the following components, in the granular state, were compounded:

- 95 part by weight of an ethylene/propylene/diene (EPDM) copolymer, silanized by grafting (content of vinyl-trimethoxy-silane = 1.2%; sold by AEI Cables Ltd. as "Sioplas Compound 17433");
- 5 parts by weight of a masterbatch containing 1% by weight of dibutyltin-dilaurate in low-density polyethylene, sold by AEI Cables Ltd., as "Sioplas Compound 17401".

The granular composition was extruded in the extruder used in the preceding examples, at a temperature of 120°C, and a band was produced, which band was 3 mm thick and 25 mm wide. On a sample of this band, the "hot set" was determined according to the IEC 502/540 Method (20°C/20 N/15 minutes). After less than 1 minute, the breakage of the specimen was recorded.

EXAMPLE 7

A masterbatch constituted by equal parts by weight of:
- an AEI "Sioplas Compound 17401" catalyst masterbatch, as used in example 6, in granular form;
- a zeolite powder dehydrated d . to 10% of $H_2O$, prepared, by calendering, from "Merilit®B" 4A zeolite, sold by Ausidet. The sheet thus obtained was cut into stripes and was ground in a blade mill.

10 parts by weight of masterbatch were blended on a drum tumbler with 90 parts by weight of the silanized EPDM (granulated "Sioplas Compound 174333") described in example 6. The granular composition was extruded by means of the extruder used in example 6, at a temperature of 120°C, and thus a band, 4 mm thick and 25 mm wide, was produced. On a sample of this band, the hot set according to IEC 502/540 Method (200°C/20 N/15 minutes) was determined. The strain, under tensile stress, was 80% and the permanent set was lower than 15%.

EXAMPLE 8

The process was carried out in exactly the same way as in example 2, but using a zeolite of the 13X type, which was prepared by dehydrating "Merilit®E" down to an $H_2O$ content of 10%. In the finished article a gel content of 75% was determined.

EXAMPLE 9

The process was carried out by operating as in example 7, blending 5 parts by weight of masterbatch (containing the catalyst and 4A zeolite at 10% of $H_2O$) with 95 parts of silanized EPDM ("Sioplas Compound 174333"). The shaped article, obtained by extrusion at 140°C, was evaluated for its hot set at 200°C, according to IEC 502/540 Standard, and displayed a strain, under tensile stress, of 70%, with a permanent set lower than 15%.

EXAMPLE 10

The process was carried out according to example 7, using a zeolite dehydrated down to 8% of $H_2O$ (in the catalyst containing masterbatch). The silanized EPDM was "Sioplast Compound 17505". The shaped article, obtained by extrusion at 120°C, showed a content of 50% by weight of insoluble gel.

Claims

1. Process for producing, by extrusion, injection-moulding or any other conventional shaping method, crosslinked articles based on silanized olefinic polymers, said articles having a degree of silane crosslinking of at least 45%, characterized by adding to said polymers, before or during said shaping, a molecular sieve having a zeolite structure in an amount such that the amount of water contained therein is at least about 0.5 mol per mol of reactive silane groups present in the polymers.

2. Process according to claim 1, wherein said molecular sieve is selected from the zeolites of the 3A, 4A, 5A, Y, P or X type (also in acidic form), and hydroxysodalite.

3. Process according to any one of claims 1 and 2, wherein said molecular sieve has a water content of from about 3% to about 18% by weight, preferably from about 5% to about 15% by weight.

4. Process according to any one of the preceding claims, wherein the silanized polymer corresponds to an olefinic polymer selected from:
- high-density, medium-density and low-density polyethylene;
- polypropylene;
- copolymers of ethylene and propylene and/or other monoolefins;
- ethylene/vinyl acetate or ethylene/(meth)acrylate copolymers;
- ethylene/propylene/diene terpolymers.

5. Process according to any one of the preceding claims, characterized in that the shaping, particularly the extrusion or injection moulding, is carried out in the presence of a silanol condensation catalyst, preferably selected from dibutyltin-dilaurate, tetra-n-butyl titanate and polymeric butyl titanate.

6. Process according to claim 5, wherein the amount of the silanol condensation catalyst is from about 0.05 to about 0.10% by weight, based on the weight of the olefinic polymer.

7. Process according to any one of the preceding claims, characterized in that the shaping of the article is carried out in the presence of a crosslinking co-agent, preferably selected from arylsulfonic acids and arylcarboxylic acids, in particular tert.-butyl-benzoic acid.

8. Process according to claim 7, wherein the amount of said crosslinking co-agent is from about 1 to about 25 parts by weight per 100 parts of zeolite.

9. Shaped articles, obtainable according to the process of any one of claims 1 to 8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 149 782 (GIMPEL)<br>* Example 2; page 4, lines 18-23 * | 1-9 | C 08 K 3/34<br>C 08 L 23/04 |

TECHNICAL FIELDS
SEARCHED (Int. Cl.5)

C 08 K
C 08 L

The present search report has been drawn up for all claims

| Place of search | Date of completion of the search | Examiner |
|---|---|---|
| THE HAGUE | 06-11-1989 | WILSON A.J.D. |